# EUROPÄISCHE PATENTSCHRIFT

(11) **EP 2 052 302 B1**
(45) Veröffentlichungstag und Bekanntmachung des Hinweises auf die Patenterteilung: **25.05.2011**
(21) Anmeldenummer: 07786513.7
(22) Anmeldetag: 02.08.2007
(51) Int. Cl.: G05B 23/02, B60R 16/02, G07C 5/00, G01M 17/00, G05B 19/042

(54) **WERKSTATTSYSTEM MIT EINER MEHRZAHL VON ÜBER DATENVERBINDUNGEN VERNETZTEN DIAGNOSE- UND/ODER PROGRAMMIER-VORRICHTUNGEN FÜR FAHRZEUGE**
WORKSHOP SYSTEM WITH A PLURALITY OF DIAGNOSIS AND/OR PROGRAMMING APPARATUSES NETWORKED BY MEANS OF DATA LINKS FOR VEHICLES
SYSTÈME D'ATELIER COMPRENANT UNE PLURALITÉ DE DISPOSITIFS DE DIAGNOSTIC ET/OU DE PROGRAMMATION POUR VÉHICULES RELIÉS EN RÉSEAU PAR LE BIAIS DE LIAISONS DE DONNÉES

(30) Priorität: 17.08.2006 DE 102006038425
(43) Veröffentlichungstag der Anmeldung: 29.04.2009
(73) Patentinhaber: Bayerische Motoren Werke Aktiengesellschaft, 80809 München (DE)
(72) Erfinder: TORLO, Marc, 85551 Kirchheim bei München (DE); MÜLLER, Stefan, 85540 Haar-Gronsdorf (DE)
(86) Internationale Anmeldenummer: PCT/EP2007/006837
(87) Internationale Veröffentlichungsnummer: WO 2008/019764

(56) Entgegenhaltungen:
- EP-A- 1 574 396
- DE-A1- 10 157 578
- JP-A- 11 099 891

## Beschreibung

Die Erfindung betrifft ein Werkstattsystem mit einer Mehrzahl von über Datenverbindungen vernetzten Diagnose- und/oder Programmier-Vorrichtungen für Fahrzeuge.

Heutige Diagnose- und Programmier-Vorrichtungen in den Fahrzeug-Werkstätten arbeiten vollständig autark und losgelöst von den übrigen Systemen einer Werkstatt. Auf der bekannten Diagnose- und Programmier-Vorrichtung, die mit dem betreffenden Fahrzeug kommuniziert, läuft jeweils lokal eine Service-Applikation ab, z. B. Diagnose oder Programmierung eines oder mehrerer Steuergeräte. Insbesondere die Programmierung eines oder mehrerer Steuergeräte des Fahrzeugs kann einen relativ langen Zeitraum in Anspruch nehmen, während dem der betreffende Werkstatt-Mitarbeiter nicht immer anwesend sein muss.

Tritt bei einer der Diagnose- und Programmier-Vorrichtungen ein Ereignis auf, auf das durch den betroffenen Werkstatt-Mitarbeiter reagiert werden muss, so kann dies erst erfolgen, wenn der Werkstatt-Mitarbeiter beim nächsten Mal wieder den Fortschritt des durchzuführenden Prozessschritts kontrolliert. Sind dies unkritische Ereignisse, wie zum Beispiel die Bestätigung zur Ausführung des nächsten Teilschritts, so wird hier (lediglich) die Gesamtdauer des Vorgangs erhöht. Sind es aber kritische Ereignisse, wie zum Beispiel das Unterschreiten einer Energieuntergrenze zum Betrieb der Diagnose- und Programmier-Vorrichtung oder einer ihrer Komponenten, z.B. beim Akku eines TabletPCs, oder das Errreichen eines kritischen Energieniveaus beim Fahrzeug, so kann auf diese Ereignisse nicht zeitnah reagiert werden. Ein Nichtreagieren kann je nach unterbrochenem Teilschritt, insbesondere währen der Programmierung eines oder mehrerer Steuergeräte des Fahrzeugs, zu einem defekten Steuergerät und damit zu einem größeren wirtschaftlichen Schaden führen.

Aus der DE 101 57 578 A1 ist ein System zum Programmieren eines oder mehrerer elektronischer Steuergeräte eines Kraftfahrzeugs nach dem Oberbegriff des Anspruchs 1 bekannt.

Aus der JP 11 099891 A ist bekannt, dass beim Programmieren eines Steuergeräts und zur Vermeidung von Fehlern die Versorgungsspannung des Fahrzeugs bzw. der Programmiervorrichtung überwacht wird.

Die EP-A-1 574 396 beschreibt ein Fertigungs-Verfahren für Kraftfahrzeuge, bei dem während eines Montageprozesses an aufeinanderfolgenden Montagestationen elektronische Einheiten verbaut werden. Die Einheiten werden während des Montageprozesses mit fahrzeugindividuellen Programmen und/oder Daten versehen. Die Programme und Daten werden aus einem mobilen Computer entnommen, der vorbereitend mit diesen Programmen und Daten geladen und anschließend in das Fahrzeug gebracht wird. Aus diesem werden die Programme und Daten nach dem Einbau der Einheiten durch den Computer gesteuert ausgelesen.

Aufgabe der vorliegenden Erfindung ist es daher, die Zuverlässigkeit bekannter Werkstattsysteme zu erhöhen.

Diese Aufgabe wird durch die im Anspruch 1 angegeben Maßnahmen gelöst. Vorteilhafte Weiterbildungen sind Gegenstand der abhängigen Ansprüche.

Ein wesentlicher Aspekt der Erfindung besteht darin, das bekannte Werkstattsystem erfindungsgemäß so zu gestalten, dass einerseits eine permanente Anwesenheit eines Werkstatt-Mitarbeiters an einer in Betrieb befindlichen Diagnose- und/oder Programmier-Vorrichtung für Fahrzeuge entbehrlich ist und andererseits ein Schaden aufgrund fehlenden Eingreifens bei Eintreten eines Ereignisses, das möglichst sofortiges Handeln erfordert, verhindert wird. Der Werkstatt-Mitarbeiter kann bei dem erfindungsgemäßen Werkstattsystem bereits an der nächsten Diagnose- und/oder Programmier-Vorrichtung, das mit einem anderen Fahrzeug in Verbindung steht, tätig werden, wenn der Diagnose- und/oder Programmiervorgang an der anderen Vorrichtung noch läuft. Tritt ein Ereignis auf, das sein kurzfristiges Handeln erfordert, wird ihm dies (auch) an der anderen Diagnose- und/oder Programmier-Vorrichtung mitgeteilt. Bevorzugt handelt es sich um die Diagnose-und/oder Programmier-Vorrichtung an der er zuletzt tätig war.

Das erfindungsgemäße Werkstattsystem zeichnet sich ggü, bekannten Systemen durch eine höhere Produktivität und dadurch aus, dass Störungen gezielt beseitigt werden können. Da die Diagnose- und Programmier-Vorrichtungen (zumindest in den Werkstätten der Anmelderin) bereits per Ethernet-Netzwerk miteinander verbunden sind hierüber miteinander kommunizieren können, ist der Aufwand zur Realisierung eines erfindungsgemäßen Werkstattsystems auf der Basis eines bekannten Werkstattsystems verhältnismäßig gering; es bedarf insbesondere einer geeigneten Software.

Bei einer Ausgestaltung der Erfindung ist vorgesehen, dass ein solcher Hinweis erfolgt, wenn die Versorgungsspannung der Diagnose- und/oder Programmier-Vorrichtung und/oder des Bordnetzes des betreffenden Fahrzeugs zu stark absinkt. In einem solchen Fall ist eine zuverlässige Diagnose oder Programmierung der Steuergeräte des Fahrzeugs nicht mehr gegeben und teure Steuergeräte können sogar in einen Zustand geraten, dass sie auch nach einer Erhöhung der Versorgungsspannung dauerhaft nicht mehr programmierbar sind. Ein Absinken der Versorgungsspannung an der Diagnose- und/oder Programmier-Vorrichtung kann insbesondere dann auftreten, wenn sie von einem Akku mit Spannung versorgt werden und sich dieser im Laufe des Betriebs entlädt, wie insbesondere bei einem TabletPC.

Bei einer bevorzugten Ausführungsform der Erfindung erfolgt der Hinweis auf einer anderen Diagnose- und/oder Programmier-Vorrichtung oder allen Diagnose- und/oder Programmier-Vorrichtungen nur dann, wenn es sich um ein Ereignis mit hoher Dringlichkeit zum Eingreifen handelt.

Ebenso ist bei einer bevorzugten Ausführungsform der Erfindung vorgesehen, dass der Hinweis bei einem weniger dringenden Hinweis zunächst an der betroffenen Diagnose- und/oder Programmier-Vorrichtung ausgegeben und erst mit fortschreitender Zeit und/oder Dringlichkeit auf einer anderen Diagnose- und/oder Programmier-Vorrichtung oder allen Diagnose- und/oder Programmier-Vorrichtungen ausgegeben wird, wenn noch kein Eingreifen des Werkstatt-Mitarbeiters erfolgt ist.

Durch die vorgenannten Maßnahmen werden unnötige Ablenkungen des Werkstatt-Mitarbeiters vermieden.

Erfindungsgemäß wird von dem Werkstattsystem ermittelt, an welcher Diagnose- und/oder Programmier-Vorrichtung der betreffende Werkstatt-Mitarbeiter aktuell und/oder zuletzt tätig ist bzw. war. Hierdurch können unnötige Ablenkungen von anderen Werkstatt-Mitarbeitern vermieden werden und ein kurzfristiger Hinweis an den verantwortlichen Werkstatt-Mitarbeiter erfolgen.

Sollte der betreffende Werkstatt-Mitarbeiter nicht oder schon seit längerem nicht mehr an einer der Vorrichtungen tätig sein, so ist bei einer bevorzugten Ausführungsform der Erfindung vorgesehen, dass der Hinweis an einen anderen Werkstatt-Mitarbeiter, der am Werkstattsystem bzw. an einer Vorrichtung des Systems aktuell tätig ist, weitergeleitet wird.

## Patentansprüche

1. Werkstattsystem mit einer Mehrzahl von über Datenverbindungen vernetzten Diagnose- und/oder Programmier-Vorrichtungen für Fahrzeuge, bei dem ein Hinweis auf ein Ereignis, das ein kurzfristiges Eingreifen bei einer ersten Diagnose- und/oder Programmier-Vorrichtullng der vernetzten Vorrichtungen durch einen Werkstatt-Mitarbeiter erfordert, alternativ oder ergänzend zu einer zweiten oder weiteren Diagnose- und/oder Programmier-Vorrichtung weitergeleitet und dem Werkstatt-Mitarbeiter mitgeteilt wird, **dadurch gekennzeichnet, dass** das Werkstattsystem fortlaufend erfasst, an welcher der Diagnose- und/oder Programmier-Vorrichtungen der betreffende Werkstatt-Mitarbeiter zuletzt tätig war oder tätig ist und der Hinweis auf das Ereignis zu dieser Diagnose- und/oder Programmier-Vorrichtung weitergeleitet und dort ausgegeben wird.

2. Werkstattsystem nach Anspruch 1, **dadurch gekennzeichnet, dass** das Ereignis das Unterschreiten einer Versorgungsspannung der ersten Diagnose- und/oder Programmier-Vorrichtung ist.

3. Werkstattsystem nach Anspruch 1 oder 2, **dadurch gekennzeichnet, dass** das Ereignis das Unterschreiten einer Versorgungsspannung des Bordnetzes desjenigen Fahrzeuges ist, das von der ersten Diagnose- und/oder Programmier-Vorrichtung untersucht und/oder programmiert wird.

4. Werkstattsystem nach einem der Ansprüche 1 bis 3, **dadurch gekennzeichnet, dass** das Ereignis das Unterschreiten der Programmierspannung mindestens eines Steuergeräts desjenigen Fahrzeuges ist, das von der ersten Diagnose- und/oder Programmier-Vorrichtung untersucht und/oder programmiert wird.

5. Werkstattsystem nach einem der vorstehenden Ansprüche, **dadurch gekennzeichnet, dass** der Hinweis dann, wenn es sich um ein Ereignis mit einer ersten hohen Dringlichkeit zum Eingreifen handelt, an sämtlichen Diagnose- und/oder Programmier-Vorrichtungen ausgegeben wird.

6. Werkstattsystem nach Anspruch 5 **dadurch gekennzeichnet, dass** der Hinweis dann, wenn es sich um ein Ereignis mit einer zweiten ggü, der ersten Dringlichkeit geringeren Dringlichkeit zum Eingreifen handelt, zunächst lediglich an der betroffenen Diagnose- und/oder Programmier-Vorrichtung ausgegeben wird und der Hinweis nach einem vorgegeben Zeitraum bei fehlendem Eingreifen durch den Werkstatt-Mitarbeiter alternativ oder ergänzend an weitere oder sämtliche Vorrichtungen weitergegeben und dort ausgegeben wird.

7. Werkstattsystem nach einem der vorstehenden Ansprüche, **dadurch gekennzeichnet, dass** der Kreis der Vorrichtungen an die der Hinweis übermittelt und dort ausgegeben wird, mit fortschreitender Zeit größer wird, wenn kein Eingreifen des Werkstatt-Mitarbeiters erfolgt.

8. Werkstattsystem nach einem der vorstehenden Ansprüche, **dadurch gekennzeichnet, dass** das Werkstattsystem fortlaufend erfasst, an welcher der Diagnose- und/oder Programmier-Vorrichtungen ein anderer als der betroffene Werkstatt-Mitarbeiter zuletzt tätig war oder tätig ist und der Hinweis auf das Ereignis zu dieser Diagnose- und/oder Programmier-Vorrichtung weitergeleitet und dort ausgegeben wird.

9. Werkstattsystem nach Anspruch 8, **dadurch gekennzeichnet, dass** der Hinweis an den weiteren oder die weiteren Werkstatt-Mitarbeiter alternativ oder ergänzend erst dann ausgegeben wird, wenn ein bestimmter Zeitraum ohne Eingreifen des betroffenen Werkstatt-Mitarbeiters verstrichen ist und/oder das Ereignis eine hohe Dringlichkeit aufweist, insbesondere wenn mit einer Schädigung des Fahrzeugs oder seiner Komponenten bei fehlendem kurzfristigen Eingreifen gerechnet werden muss.

## Claims

1. A workshop system with a plurality of diagnostic and/or programming devices for vehicles networked by data links, in which an indication of an event requiring a short-term intervention by a workshop employee at a first diagnostic and/or programming device of the networked devices is forwarded, alternatively or additionally, to a second or further diagnostic and/or programming device and the workshop employee is informed thereof, **characterised in that** the workshop system continuously detects at which of the diagnostic and/or programming devices the relevant workshop employee was last working or is working and the indication of the event is forwarded to this diagnostic and/or programming device and output there.

2. A workshop system according to claim 1, **characterised in that** the event is the falling below of a supply voltage of the first diagnostic and/or programming device.

3. A workshop system according to claim 1 or 2, **characterised in that** the event is the falling below of a supply voltage of the vehicle electrical system of the vehicle which is being tested and/or programmed by the first diagnostic and/or programming device.

4. A workshop system according to any one of claims 1 to 3, **characterised in that** the event is the falling below of the programming voltage of at least one control apparatus of the vehicle which is being tested and/or programmed by the first diagnostic and/or programming device.

5. A workshop system according to any one of the preceding claims, **characterised in that** the indication is output to all the diagnostic and/or programming devices when it is an event with a first high urgency to intervene.

6. A workshop system according to claim 5, **characterised in that** the indication, when this is an event with a second urgency to intervene, which is lower than the first urgency, is firstly output only to the relevant diagnostic and/or programming device and the indication is forwarded, alternatively or additionally, to further or all the devices and output there, after a predetermined time period when the workshop employee has not intervened.

7. A workshop system according to any one of the preceding claims, **characterised in that** the circle of devices, to which the indication is sent, and output there, becomes greater as time progresses if the workshop employee does not intervene.

8. A workshop system according to any one of the preceding claims, **characterised in that** the workshop system continuously detects at which of the diagnostic and/or programming devices a workshop employee other than the relevant workshop employee was last working or is working and the indication of the event is forwarded to this diagnostic and/or programming device and output there.

9. A workshop system according to claim 8, **characterised in that** the indication to the further workshop employee(s) is only output, alternatively or additionally, when a specific time period has passed without the relevant workshop employee intervening and/or the event has a high urgency, especially if it has to be expected that there will be damage to the vehicle or its components in the absence of prompt intervention.

## Revendications

1. Système d'atelier comportant plusieurs dispositifs de diagnostic et/ou de programmation de véhicules automobiles reliés en réseau par des liaisons de transmission de données,
système selon lequel
le personnel de l'atelier peut demander une indication concernant un évènement qui nécessite une intervention brève dans un premier dispositif de diagnostic et/ou de programmation des dispositifs en réseau par un collaborateur de l'atelier, est transmis en variante ou en complément à un second ou autre dispositif de diagnostic et/ou de programmation, et est communiqué au collaborateur de l'atelier,
système **caractérisé en ce qu'**
il saisit en permanence les dispositifs de diagnostic et/ou de programmation sur lesquels le collaborateur concerné de l'atelier travaillait en dernier lieu ou est toujours occupé, et l'indication relative à l'évènement est transmise aux dispositifs de diagnostic et/ou de programmation pour y être émise.

2. Système d'atelier selon la revendication 1,
**caractérisé en ce que**
l'évènement est le dépassement vers le bas d'une tension d'alimentation du premier dispositif de diagnostic et/ou de programmation.

3. Système d'atelier selon la revendication 1 ou 2,
**caractérisé en ce que**
l'évènement relatif au dépassement vers le bas d'une tension d'alimentation du réseau embarqué, est le véhicule qui a été examiné et/ou programmé par le premier dispositif de diagnostic et/ou de programmation.

4. Système d'atelier selon l'une des revendications 1 à 3,
**caractérisé en ce que**
l'évènement et le dépassement vers le bas de la tension programmée d'au moins un appareil de commande du véhicule qui a été examiné et/ou programmé par le premier dispositif de diagnostic et/ou le programmeur du dispositif.

5. Système d'atelier selon l'une des revendications précédentes,
**caractérisé en ce que**
l'indication selon laquelle il s'agit d'un évènement ayant une première urgence élevée pour une intervention est envoyée à tous les dispositifs de diagnostic et/ou de programmation.

6. Système d'atelier selon la revendication 5,
**caractérisé en ce que**
s'il s'agit d'un évènement ayant une seconde urgence inférieure à la première urgence pour l'intervention, l'indication est tout d'abord émise à destination du dispositif de diagnostic et/ou de programmation concerné, et après un temps déterminé, en l'absence d'intervention par les collaborateurs de l'atelier, cette information est transmise en variante ou en plus à d'autres dispositifs ou à tous les dispositifs pour y être émise.

7. Système d'atelier selon l'une des revendications précédentes,
**caractérisé en ce que**
le cercle des dispositifs auquel a été transmise l'indication pour y être émise, augmente en fonction du temps s'il n'y a aucune action de la part des collaborateurs de l'atelier.

8. Système d'atelier selon l'une des revendications précédentes,
**caractérisé en ce que**
le système d'atelier saisit en permanence sur quel dispositif de diagnostic et/ou de programmation, un autre collaborateur de l'atelier que celui concerné, travaillait en dernier lieu ou y travaille toujours, et l'indication relative à l'évènement pour le dispositif de diagnostic et/ou de programmation est transmise pour être émise.

9. Système d'atelier selon la revendication 8,
**caractérisé en ce que**
l'indication est transmise à l'autre ou aux autres collaborateurs de l'atelier, en variante ou en complément seulement après une durée déterminée sans intervention du collaborateur concerné de l'atelier et/ou l'évènement a une urgence élevée, en particulier si cela peut entraîner un dommage au véhicule ou à ses composants en l'absence d'intervention rapide.
